# EUROPEAN PATENT APPLICATION

(11) **EP 4 280 707 A1**
(43) Date of publication of application: **22.11.2023**
(21) Application number: 22738999.6
(22) Date of filing: 11.01.2022
(51) Int. Cl.: H04W 52/02

(54) **TRANSMISSION CONFIGURATION METHOD AND APPARATUS, AND RELATED DEVICE**

(30) Priority: 15.01.2021 CN 202110057835
(71) Applicant: Vivo Mobile Communication Co., Ltd., Dongguan, Guangdong 523863 (CN)
(72) Inventor: ZENG, Yu, Dongguan, Guangdong 523863 (CN); LIU, Siqi, Dongguan, Guangdong 523863 (CN); JI, Zichao, Dongguan, Guangdong 523863 (CN); WANG, Huan, Dongguan, Guangdong 523863 (CN)
(74) Representative: Conti, Marco
(86) International application number: PCT/CN2022/071317
(87) International publication number: WO 2022/152120

(57) **Abstract**

This application discloses a transmission configuration method and apparatus and a related device, and pertains to the field of communication technologies. The method includes configuring a sensing time of a first mechanism to at least partially overlap an active time of a second mechanism.

## Description

### CROSS-REFERENCE TO RELATED APPLICATIONS

This application claims priority to Chinese Patent Application No. 202110057835.0, filed in China on January 15, 2021, which is incorporated herein by reference in its entirety.

### TECHNICAL FIELD

This application relates to the field of communications technologies, and in particular, to a transmission configuration method and apparatus and a related device.

### BACKGROUND

With the continuous development of communication technologies, terminals can support a variety of mechanisms, such as a discontinuous reception (Discontinuous Reception, DRX) mechanism and a sensing (sensing) mechanism. In the DRX mechanism, terminal power can be saved by configuring DRX on (DRX on) and DRX off (DRX off) duration. In the sensing mechanism, sensing can be performed within a sensing time, and resource selection is performed based on a sensing result. However, in the prior art, in a case that a terminal is configured with multiple mechanisms, for example, the terminal is configured with both the DRX mechanism and the sensing mechanism, there is no relevant solution for how to coordinate configuration parameters for different mechanisms.

### SUMMARY

Embodiments of this application provide a transmission configuration method and apparatus, and a related device, to implement coordination between different mechanisms in a case that a terminal is configured with multiple mechanisms.

According to a first aspect, an embodiment of this application provides a transmission configuration method, where the method includes:
configuring a sensing time of a first mechanism to at least partially overlap an active time of a second mechanism.

According to a second aspect, an embodiment of this application further provides a transmission configuration method, where the method includes:
performing a first operation corresponding to a first transmission; where
the first transmission is a transmission unrelated to a particular user or the first transmission is a transmission unrelated to a particular service, the first operation is an operation related to the first mechanism, and the first operation corresponding to the first transmission is unrelated to a second mechanism.

According to a third aspect, an embodiment of this application further provides a transmission configuration apparatus, where the apparatus includes:
a first configuration module adapted to configure a sensing time of a first mechanism to at least partially overlap an active time of a second mechanism.

According to a fourth aspect, an embodiment of this application further provides a transmission configuration apparatus, where the apparatus includes:
a performing module adapted to perform a first operation corresponding to a first transmission; where
the first transmission is a transmission unrelated to a particular user or the first transmission is a transmission unrelated to a particular service, the first operation is an operation related to the first mechanism, and the first operation corresponding to the first transmission is unrelated to a second mechanism.

According to a fifth aspect, an embodiment of this application further provides an electronic device. The electronic device includes a processor, a memory, and a program or instructions stored in the memory and capable of running on the processor, and when the program or instructions are executed by the processor, the steps of the method according to the first aspect are implemented.

According to a sixth aspect, an embodiment of this application further provides a terminal. The terminal includes a processor, a memory, and a program or an instruction stored in the memory and capable of running on the processor. When the program or instruction is executed by the processor, the step of the method according to the second aspect is implemented.

According to a seventh aspect, an embodiment of this application further provides a readable storage medium. A program or instructions are stored in the readable storage medium, and when the program or the instructions are executed by a processor, the steps of the method according to the first aspect are implemented, or the steps of the method according to the second aspect are implemented.

According to an eighth aspect, an embodiment of this application further provides a chip. The chip includes a processor and a communication interface, the communication interface is coupled to the processor, and the processor is adapted to run a network device program or instructions to implement the steps of the method according to the first aspect or the steps of the method according to the second aspect.

According to a ninth aspect, a computer program product is provided. The computer program product is stored in a storage medium, and the computer program product is executed by at least one processor to implement the steps of the method according to the first aspect or the steps of the method according to the second aspect.

In the embodiments of this application, the sensing time of the first mechanism is configured to at least partially overlap the active time of the second mechanism, such that coordination between the first mechanism and the second mechanism can be implemented in a case that a terminal is configured with both the first mechanism and the second mechanism, thereby improving power saving while guaranteeing sensing at sensing times.

### BRIEF DESCRIPTION OF DRAWINGS

FIG. 1 is a structural diagram of a network system to which the embodiments of this application are applicable;
FIG. 2 is a schematic diagram of DRX according to an embodiment of this application;
FIG. 3 is a schematic diagram of sensing in LTE SL according to an embodiment of this application;
FIG. 4 is a schematic diagram of partial sensing according to an embodiment of this application;
FIG. 5 is a schematic diagram of SL resource pre-emption according to an embodiment of this application;
FIG. 6 is a flowchart of a transmission configuration method according to an embodiment of this application;
FIG. 7 is a schematic diagram of sensing and DRX working according to an embodiment of this application;
FIG. 8 is a schematic diagram of configuring a sensing time and an active time according to an embodiment of this application;
FIG. 9 is a flowchart of another transmission configuration method according to an embodiment of this application;
FIG. 10 is a structural diagram of a transmission configuration apparatus according to an embodiment of this application;
FIG. 11 is a structural diagram of another transmission configuration apparatus according to an embodiment of this application;
FIG. 12 is a structural diagram of an electronic device according to an embodiment of this application; and
FIG. 13 is a structural diagram of a terminal according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that the data used in such a way is interchangeable in appropriate circumstances such that the embodiments of this application can be implemented in other orders than the order illustrated or described herein. Moreover, the objects distinguished by "first" and "second" are usually of one type, and the number of objects is not limited. For example, the first object may be one or more than one. In addition, "and/or" in the specification and claims represents at least one of connected objects, and the character "/" generally indicates that the associated objects have an "or" relationship.

It is worth noting that the technologies described in the embodiments of this application are not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, and NR terms are used in most of the following descriptions, although these technologies may also be applied to other applications than the NR system application, for example, the 6th generation (6^{th} Generation, 6G) communication system.

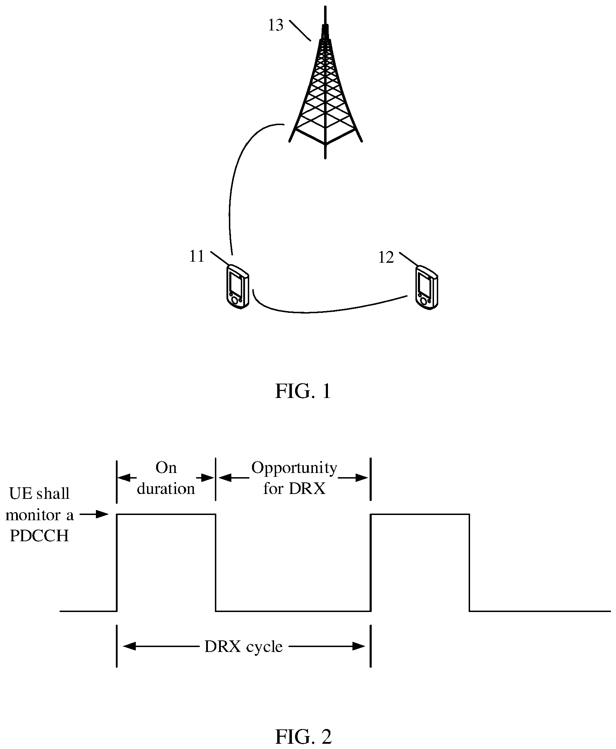

FIG. 1 is a block diagram of a wireless communication system to which the embodiments of this application are applicable. The wireless communication system includes a first terminal 11, a second terminal 12, and a network device 13. The first terminal 11 and the second terminal 12 may also be referred to as a terminal device or user equipment (User Equipment, UE). The first terminal 11 and the second terminal 12 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VUE), or pedestrian user equipment (PUE). The wearable device includes a wrist band, earphones, glasses, and the like. It should be noted that the first terminal 11 and the second terminal 12 are not limited to a specific type in the embodiments of this application, and furthermore, one or at least two second terminals 12 may be present.

The network device 13 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

For ease of understanding, the following describes some content included in the embodiments of this application:

### I. Discontinuous reception over LTE and NR Uu interfaces

The discontinuous reception (Discontinuous Reception, DRX) mechanism is introduced in both LTE and NR, and DRX on and DRX off duration is configured to implement power saving for UE. As shown in FIG. 2, an on duration (on duration) is a DRX on period, and if no scheduling is performed for UE during the on duration, the UE enters an off duration of a DRX cycle (DRX cycle).

Parameters such as an on duration timer onDurationTimer (onDurationTimer), an inactivity timer (drx-InactivityTimer), a retransmission timer (drx-RetransmissionTimer), and longDRX- CycleStartOffset are configured in DRX configuration.

After DRX is configured for the UE, if decoding of transmitted or received data fails, the UE needs to enter an active time to monitor a control channel and wait for retransmission scheduled by a network.

During the on duration time, if the UE is scheduled in a slot (slot) and receives data, the UE is likely to continue to be scheduled in next several slots. Therefore, a timer drx-InactivityTimer is started or restarted whenever the UE is scheduled to perform initial data transmission, and the UE remains in an active state until the timer expires.

For downlink data reception, after receiving downlink data transmission indicated by a physical downlink control channel (Physical Downlink Control Channel, PDCCH) and feeding back hybrid automatic repeat request (Hybrid Automatic Repeat Request, HARQ) information, the UE starts a downlink round trip time timer (HARQ RTT Timer) for a corresponding HARQ process, where RRT (Round Trip Time) is a round trip time. If the HARQ RTT timer expires and data of the HARQ process is not successfully decoded, the UE starts a retransmission timer (drx-RetransmissionTimer), monitors the PDCCH, and waits for transmission.

For uplink data transmission, after receiving uplink data transmission that is indicated by a PDCCH, the UE starts an uplink round trip time timer HARQ RTT Timer for a corresponding HARQ process. After the HARQ RTT timer expires, the UE starts a retransmission timer (drx-ULRetransmissionTimer), enters the active state to monitor the PDCCH, and waits for transmission scheduled by the network.

### II. Sensing in LTE sidelink (Sensing in LTE SL)

The basic working principle of LTE sidelink sensing (LTE Sidelink Sensing) is as follows:
performing measurement within a sensing window (Sensing Window) and performing scheduling assignment (Scheduling Assignment, SA) demodulation and interference measurement within each sensing transmission time interval (Transmission Time Interval, TTI).

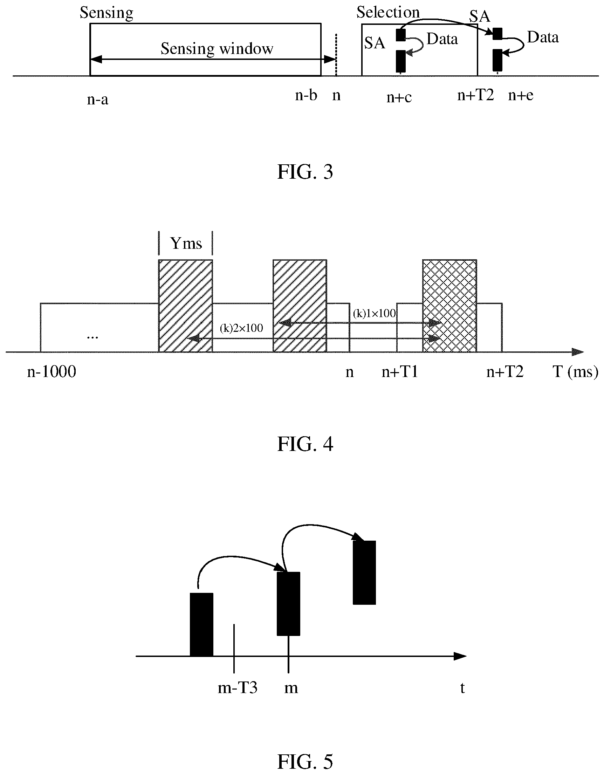

Based on FIG. 3, the UE selects a resource in the following steps.
(1) Exclude resources with UE data to send.
(2)The terminal demodulates a received SA to obtain resources reserved by other UEs, so as to exclude the resources reserved by other UEs.
(3) Perform energy sensing within a sensing window by measuring a reference signal strength indicator (Reference Signal Strength Indication, RSSI), and then based on a measurement result, exclude resources with great interference.
(4) Randomly select a subframe (Subframe) from 20% resources with least interference within a selection window, so as to implement periodic resource reservation.

### III. Partial sensing in LTE SL (Partial sensing in LTE SL)

Partial sensing in vehicle to everything (Vehicle to Everything, V2X) of LTE is mainly designed to save power so as to support pedestrian to vehicle (Pedestrian to Vehicle, P2V) communication. PUE supports two resource selection modes. One mode is random resource selection. The other mode is performing partial sensing first, and selecting a resource based on a partial sensing result to make semi-persistent resource reservation. Which mode to be selected by the PUE is configured via radio resource control (Radio Resource Control, RRC), and when two resource selection modes being supported is configured by RRC, the PUE determines a resource selection manner to be used.

Based on FIG. 4, the terminal performs partial sensing and resource sensing in the following manner.

A PUE sensing window is a window filled with oblique lines in a range of [n-1000, n], and lengths Y and k are parameters configured by RRC, where a value of k may range from { 1, 2, 3,...,10}. A window filled with intersecting lines in [n+T1, n+T2] is a PUE selection window configured by a higher layer. In the sensing window filled with oblique lines, the PUE monitors sidelink control information (Sidelink Control Information, SCI) sent by other terminals; and based on detected SCI and a reservation period, infers a resource reservation status of other terminals in the window filled with intersecting lines. Then, based on such information, the PUE may exclude resources not satisfying a condition from the selection window. At least 20% of the remaining resources (20% of the window length Y) is used as a candidate resource set and reported to a medium access control (Media Access Control, MAC) layer. The MAC layer randomly selects a resource from the candidate resource set as a candidate resource of the PUE. The PUE performs periodic reservation for the selected resource, and a reservation period is indicated in SCI.

### IV. Random selection in SL (Random selection in SL)

If a user performs random selection, a resource is randomly selected from the selection window in FIG. 4 with no sensing (sensing) required.

### V. Sensing in NR SL (Sensing in NR SL)

In resource allocation mode 2 (Mode 2), resource selection based on sensing is supported. Its principle is similar to the sensing mechanism in LTE SL mode 4 (mode4). The specific workings are as follows: (1) Transmit UE (TX UE) determines a resource selection window after resource selection is triggered. (2) Before resource selection, the UE needs to determine a candidate resource set (candidate resource set) for resource selection by comparing reference signal received power (Reference Signal Receiving Power, RSRP) measured on resources in the resource selection window with a corresponding RSRP threshold (threshold) and then adding the resources into the candidate resource set if the RSRP is lower than the RSRP threshold. (3) After the resource set is determined, the UE randomly selects a transmission resource from the candidate resource set. In addition, the UE may reserve a transmission resource for a next transmission during a current transmission.

In Rel-16 NR SL, the TX UE performs resource reservation (the reservation includes periodic reservation and aperiodic reservation) for the resources allocated for the TX UE, and a reserved resource is used for future physical sidelink control channel (Physical Sidelink Control Channel, PSCCH) transmission or physical sidelink shared channel (Physical Sidelink Sharing Channel, PSSCH) transmission. The aperiodic reservation may be implemented through a time domain resource assignment (Time resource assignment) field in SCI, and the reserved resource may be used at least for transmission of a same transport block (Transport Block, TB). The periodic reservation may be implemented through a resource reservation period (Resource reservation period) field in the SCI, and the periodic resources reserved in a current period may be used for transmission of a next TB.

### VI. Resource pre-emption in NR SL (Resource pre-emption in NR SL)

In resource allocation mode 2, a resource pre-emption mechanism is supported. A brief description of the mechanism is as follows: In a case that a resource reserved/selected by UE overlaps (or partially overlaps) with a resource reserved/selected by another UE with a higher priority service, when a measured SL-RSRP value of the UE on the related resource is greater than an associated SL-RSRP (associated SL-RSRP) threshold, the UE triggers resource reselection. The service priority and the SL-RSRP threshold are determined based on a TB transmitted on the resource.

As shown in FIG. 5, in order to determine whether a reserved or selected resource (PSCCH/PSSCH resource) is pre-empted, the UE performs re-evaluation for resource selection at least at a time point m-T3, where the time point m represents a time point at which the resource is located or is used for indicating a time point at which resource reservation information is transmitted, and T3 includes at least a processing duration for resource selection of the UE.

### VII. Cast type (Cast type)

NR sidelink supports broadcast, groupcast, and unicast transmission modes. Groupcast of NR sidelink supports two use cases: connection-based groupcast and connectionless groupcast, where the connection-based groupcast means that a connection is established between UEs in groupcast, and the connectionless mode refers to a scenario in which a groupcast UE does not know other UEs in one group and no connection is established therebetween. In a case of groupcast, a plurality of receive ends support two mechanisms in performing HARQ feedback:
Mechanism 1 (option 1, NACK only feedback, or connectionless (connectionless) mechanism): If data is received but cannot be decoded, NACK is fed back. No feedback is provided in other cases. In such case, if a receiving party receives no NACK, all the receive ends are considered to have successfully received and decoded the data. However, this mechanism has one disadvantage: a transmitting party may confuse successful reception of data with unsuccessful reception of SCI by the receiving party. That is, although the receiving party has failed in reception of the SCI and data, the transmitting party assumes that the receiving party has successfully received the SCI and data. This manner is applicable to a connectionless groupcast scenario.
Mechanism 2 (option2, ACK/NACK feedback or connection-based (connection-based) mechanism): If data is received but cannot be decoded, or SCI is received but no data is received, NACK is fed back; if data is received and decoded correctly, ACK is fed back. In this case, if a transmitting party receives NACK transmitted from one transmit end user or receives no ACK or NACK, the transmitting party assumes that transmission to the user has failed; if the transmitting party receives ACK transmitted from one transmit end, the transmitting party assumes that transmission to the user is successful. This manner is applicable to a connection-based groupcast scenario.

In addition, it should be noted that:
(1) DRX active time (active time) may be a time (active period) for UE to monitor/receive/demodulate/measure a specific channel/signal/signaling, and the specific channel/signal/signaling may be a PSCCH/PSSCH/PSBCH/PSFCH/SCI/S-SSB/RS. For example, the DRX active time may include at least one of DRX on duration, inactivity timer duration, and retransmission timer duration.
(2) DRX inactive time (inactive time) is a time (dormant period) for UE not to monitor/receive/demodulate/measure a specific channel/signal/signaling, and the specific channel/signal/signaling may be a PSCCH/PSSCH/PSBCH/PSFCH/SCI/S-SSB/RS. For example, the DRX inactive time may include at least one of DRX off duration and RTT timer duration.
(3) Sensing time (sensing time) can also be described as a sensing window (sensing window), sensing moment (sensing moment), sensing range (sensing range), sensing slot set (sensing slot set), sensing resource set (sensing resource set), or sensing sample (sensing sample).
(4) T1/T2: T1 and T2 are defined as respective gaps from a resource selection or reselection triggering moment n to upper and lower limits of a selectable range [n+T_1, n+T_2] of resource selection time. Their values depend on UE implementations and should satisfy 0 ≤ T_1 ≤ T_(proc,1)^SL and T_2min ≤ T_2 ≤ remaining packet budget (remaining packet budget) (measured in slots). T_(proc,1)^SL is a preset value, T_2min is a value indicated by a higher layer, and when T_2min is greater than the remaining packet budget, T_2 is equal to the remaining packet budget.

The following specifically describes the transmission configuration method provided in the embodiments of this application through specific embodiments and application scenarios thereof with reference to the accompanying drawings.

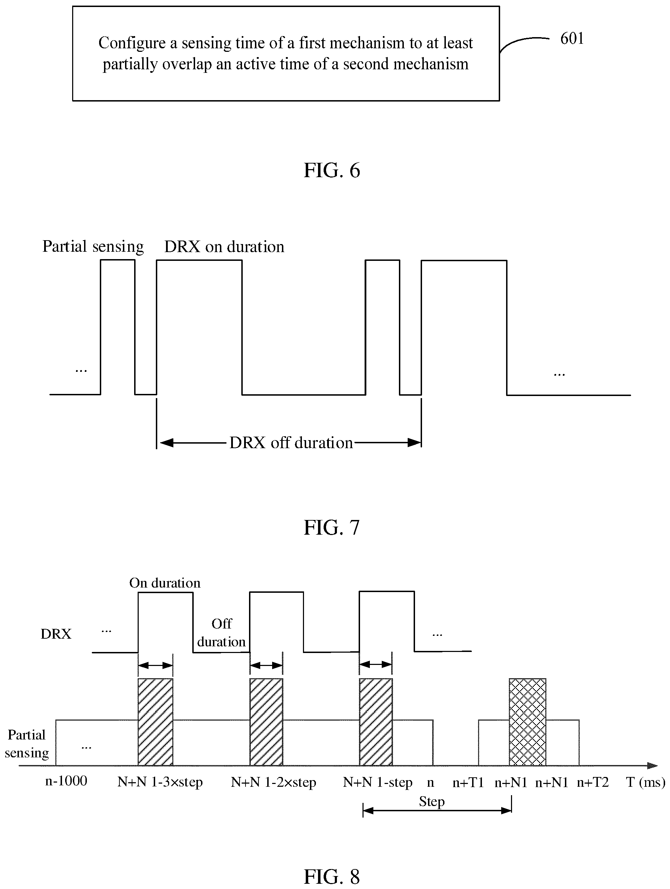

Refer to FIG. 6. FIG. 6 is a flowchart of a transmission configuration method according to an embodiment of this application. The method may be executed by an electronic device. The electronic device may be a first terminal, a second terminal, or a network device. The first terminal may be a terminal configured with both a first mechanism and a second mechanism. The second terminal may be any terminal that can communicate with the first terminal. For example, the second terminal may communicate with the first terminal through a sidelink.

As shown in FIG. 6, the transmission configuration method provided in this embodiment of this application includes the following step.

Step 601. Configure a sensing time of the first mechanism to at least partially overlap an active time of the second mechanism.

In this embodiment, the first mechanism may include a sensing (sensing) mechanism, and the second mechanism may include a DRX mechanism. The sensing time may also be described as a sensing window, sensing moment, sensing range, sensing slot set, sensing resource set, sensing sample, or the like. The active time may include at least one of DRX on duration, inactivity timer (inactivity timer) duration, and retransmission timer (retransmission timer) duration.

In an embodiment, the configuring a sensing time of the first mechanism to at least partially overlap an active time of the second mechanism may be configuring a parameter related to the first mechanism so as to make the sensing time of the first mechanism at least partially overlap the active time of the second mechanism. For example, at least one of a configuration parameter for the sensing time of the first mechanism, a configuration parameter for a resource selection time of the first mechanism, and a configuration parameter of a selectable range of resource selection time of the first mechanism may be configured such that the sensing time of the first mechanism at least partially overlaps the active time of the second mechanism.

In another embodiment, the configuring a sensing time of the first mechanism to at least partially overlap an active time of the second mechanism may be configuring a parameter related to the second mechanism so as to make the sensing time of the first mechanism at least partially overlap the active time of the second mechanism. For example, at least one of a configuration parameter for the active time of the second mechanism, a configuration parameter for an inactive time of the second mechanism, and the like may be configured such that the sensing time of the first mechanism at least partially overlaps the active time of the second mechanism.

In another embodiment, the configuring a sensing time of the first mechanism to at least partially overlap an active time of the second mechanism may be configuring a parameter related to the first mechanism and a parameter related to the second mechanism so as to make the sensing time of the first mechanism at least partially overlap the active time of the second mechanism. For example, a configuration parameter for the sensing time of the first mechanism and a configuration parameter for the active time of the second mechanism are configured such that the sensing time of the first mechanism at least partially overlaps the active time of the second mechanism.

It should be noted that in this embodiment, the first terminal may configure the sensing time of the first mechanism to at least partially overlap the active time of the second mechanism through at least one of network device configuration, pre-configuration, second-terminal indication, protocol agreement, first-terminal determining, and the like. This is not limited in this embodiment. In a case that the sensing time of the first mechanism is configured by a network device or the second terminal to at least partially overlap the active time of the second mechanism, the first terminal may receive the configuration that the sensing time of the first mechanism at least partially overlaps the active time of the second mechanism from the network device or the second terminal.

It should be noted that in a case that the sensing time of the first mechanism is configured to at least partially overlap the active time of the second mechanism, the first terminal may only perform sensing at an overlapping part of the sensing time of the first mechanism and the active time of the second mechanism, or may perform sensing within the entire sensing time of the first mechanism, in other words, sensing of the first terminal is not limited by the active time. This is not limited in this embodiment.

In practical application, in a case that the first terminal is configured with both the DRX mechanism and the sensing mechanism and that the DRX mechanism and the sensing mechanism are mutually restricted by each other, to be specific, the first terminal can perform sensing only within DRX on duration or DRX active time, and cannot receive |SCI in a case that the sensing time is not within the DRX on duration or DRX active time, and hence cannot performing sensing. In this case, the total consumed energy may be less than that in the case of only the sensing mechanism being supported and the DRX mechanism being not supported, but due to sensing time reduction, it is more likely that a resource selected and a resource for other uses are under contention, resulting in a decline in reliability. In a case that the DRX and sensing mechanisms are not mutually restricted by each other, that is, the sensing time is not within the DRX on duration or DRX active time, the first terminal can still perform sensing in the sensing time. Although this can guarantee sensing performing, in this case, power of the first terminal is not desirably saved. For example, the overall power consumed is more than the power consumed in any sole mechanism. Further, as shown in FIG. 7, short radio frequency (RF) on and off between the sensing and DRX mechanisms may make the first terminal not capable of entering deep sleep (deep sleep), because there is not enough time after one of the mechanisms ends, potentially increasing power consumption.

In this embodiment of this application, the sensing time of the first mechanism is configured to at least partially overlap the active time of the second mechanism, such that coordination between the first mechanism and the second mechanism can be implemented, thereby improving power saving while guaranteeing sensing at sensing times.

Optionally, the configuring a sensing time of a first mechanism to at least partially overlap an active time of a second mechanism may include at least one of the following:
configuring a configuration parameter for the sensing time of the first mechanism such that the sensing time at least partially overlaps the active time of the second mechanism;
configuring a configuration parameter for a resource selection time of the first mechanism such that a sensing time corresponding to the resource selection time at least partially overlaps the active time of the second mechanism;
determining a candidate resource set of the first mechanism such that a sensing time corresponding to the candidate resource set at least partially overlaps the active time of the second mechanism;
configuring a value of a first parameter for the first mechanism such that a sensing time corresponding to a selectable range of resource selection time related to the first parameter at least partially overlaps the active time of the second mechanism, the first parameter including at least one of a first sub-parameter and a second sub-parameter, the first sub-parameter being a gap between a resource selection or reselection triggering moment and a start point of the selectable range of resource selection time, and the second sub-parameter being a gap between the resource selection or reselection triggering moment and an end point of the selectable range of resource selection time; and
configuring a configuration parameter for the second mechanism such that the sensing time of the first mechanism at least partially overlaps the active time of the second mechanism.

The sensing time may be a partial sensing (partial sensing) time, full sensing (full sensing) time, sensing time for aperiodic service sensing, sensing time for aperiodic service re-evaluation (re-evaluation), sensing time for aperiodic service pre-emption (pre-emption), sensing time indicated by SCI, or the like. The configuration parameter for the sensing time may include but is not limited to at least one of a start point of the sensing time, an end point of the sensing time, duration of the sensing time, and the like.

The configuration parameter for the resource selection time may include but is not limited to at least one of a start point of the resource selection time, an end point of the resource selection time, duration of the resource selection time, and the like. It should be noted that the resource selection time can also be referred to as a resource reselection time in a case of resource reselection.

The candidate resource set may include one or more candidate resources. Optionally, the candidate resource may be a slot (slot).

The sensing time corresponding to the selectable range of resource selection time related to the first parameter may be understood as a sensing time corresponding to a resource selection time determined based on the selectable range of resource selection time related to the first parameter. It should be noted that in this embodiment of this application, configuring the value of the first parameter can limit selectable ranges of the resource selection time, the candidate resource set, and a resource reporting time, such that corresponding, associated, or related sensing times of the resource selection time, the candidate resource set, and the resource reporting time at least partially overlaps the DRX active time.

The configuration parameter for the second mechanism may include but is not limited to at least one of a period of the second mechanism, a configuration parameter for the active time of the second mechanism, a configuration parameter for an inactive time of the second mechanism, and the like, for example, at least one of a DRX cycle, a configuration parameter for DRX active time, and a configuration parameter for DRX inactive time.

It should be noted that the configuring may be understood as parameter setting or parameter adjustment. For example, the configuring a configuration parameter for the sensing time of the first mechanism may also be understood as adjusting the configuration parameter for the sensing time of the first mechanism; the configuring a configuration parameter for a resource selection time of the first mechanism may also be understood as adjusting the configuration parameter for the resource selection time of the first mechanism; the configuring a value of a first parameter for the first mechanism may also be understood as adjusting the value of the first parameter for the first mechanism; and the configuring a configuration parameter for the second mechanism may also be understood as adjusting the configuration parameter for the second mechanism.

Optionally, the configuring a configuration parameter for the sensing time of the first mechanism includes at least one of the following:
configuring a start point of the sensing time to be a start point of the active time or configuring a start point of the sensing time to be offset by a first offset value relative to a start point of the active time;
configuring an end point of the sensing time to be an end point of the active time or configuring an end point of the sensing time to be offset by a second offset value relative to an end point of the active time; and
configuring duration of the sensing time to be shorter than or equal to duration of the active time.

In this embodiment, both the first offset value and the second offset value may be set properly depending on an actual situation. The being offset by a first offset value relative to a start point of the active time may be being negatively offset by the first offset value relative to the start point of the active time or being positively offset by the first offset value relative to the start point of the active time. The being offset by a second offset value relative to an end point of the active time may be being negatively offset by the second offset value relative to the end point of the active time or being positively offset by the second offset value relative to the end point of the active time.

It should be noted that the offset values in this embodiment of this application may be positive or negative numbers, and this is not described in detail again in the following.

Optionally, the configuring a configuration parameter for the sensing time of the first mechanism may include:
determining, based on a degree of overlapping of the sensing time with the active time, whether to change the sensing time.

In this embodiment, the degree of overlapping may be represented by overlapping duration or an overlapping percentage. Optionally, a current sensing time may be changed in a case that a degree of overlapping of another sensing time and the active time is higher than a degree of overlapping of the current sensing time and the active time. For example, in a case that the UE performs partial sensing (partial sensing), sensing times numbered 1, 3, 5, 7, and 9 are currently used for sensing, but partial sensing times numbered 2, 4, 6, 8, and 10 and a current DRX active time have a higher degree of overlapping, so the UE may change the current sensing times for partial sensing to the sensing times numbered 2, 4, 6, 8, and 10.

Optionally, in a case of changing the sensing time, the changed-to sensing time includes at least a part of the changed sensing time.

For example, in a case that the UE changes the partial sensing times numbered 1, 3, 5, 7, and 9, at least a part of the partial sensing times numbered 1, 3, 5, 7, and 9 may be kept unchanged, for example, the partial sensing times numbered 5, 7, and 9, so as to ensure the reliability of sensing during changing.

Optionally, the configuring a configuration parameter for a resource selection time of the first mechanism includes at least one of the following:
configuring a start point of the resource selection time to be no earlier than the start point of the selectable range of resource selection time or configuring a start point of the resource selection time to be no earlier than a time offset by a third offset value relative to the start point of the selectable range of resource selection time;
configuring an end point of the resource selection time to be no later than the end point of the selectable range of resource selection time or configuring an end point of the resource selection time to be no later than a time offset by a fourth offset value relative to the end point of the selectable range of resource selection time; and
configuring duration of the resource selection time to be less than a first threshold.

Optionally, the first threshold is duration of the active time of the second mechanism.

Optionally, the configuring a configuration parameter for a resource selection time of the first mechanism such that a sensing time corresponding to the resource selection time at least partially overlaps the active time of the second mechanism may include:
configuring the configuration parameter for the resource selection time of the first mechanism such that at least p of the sensing time at least partially overlaps the active time, where p is a positive integer.

For example, in a case that the resource selection time is [n+N1, n+N2] and that the sensing times are partial sensing times, at least p of the partial sensing times [n+N1-k×step, n+N2-k×step] (k = 1, 2, 3 ..., step being the step of the partial sensing times) corresponding to the resource selection time at least partially overlap the DRX active time.

For another example, as shown in FIG. 8, a DRX configuration is given. In a case of P=2 (that is, at least two of partial sensing times corresponding to the resource selection time set by the UE need to at least partially overlap the DRX active time), the UE may set the resource selection time to [n+N1, n+N2], that is, the window filled with intersecting lines in FIG. 8, and based on the value of the step, obtain the corresponding partial sensing times, that is, the windows filled with oblique lines in the figure. In this case, at least two of the partial sensing times at least partially overlap the DRX on duration. In a case that partial sensing times corresponding to the resource selection time [n+N1, n+N2] selected by the UE cannot satisfy the condition that at least two partial sensing times at least partially overlap the DRX on duration, the UE may adjust the values of N1 and/or N2 until the condition is met.

Optionally, the configuring a value of a first parameter for the first mechanism includes at least one of the following:
configuring a difference between the first sub-parameter and the second sub-parameter to be less than a second threshold; and
determining a value of the first sub-parameter such that the start point of the selectable range of resource selection time is no later than an end point of the active time.

In this embodiment, the second threshold may be properly set depending on an actual situation. For example, the second threshold may be a value less than or equal to duration of the active time. Optionally, the second threshold is duration of the active time.

For example, the determining a value of the first sub-parameter such that the start point of the selectable range of resource selection time is no later than an end point of the active time is determining the value of the first sub-parameter such that the start point of the selectable range of resource selection time is the end point of the active time.

Optionally, a first object satisfies a packet delay budget (Packet Delay Budget, PDB) limitation, and the first object includes at least one of the resource selection time and the selectable range of resource selection time.

In this embodiment, in a case that the first object includes the resource selection time, the configuration parameter for the resource selection time may be configured such that the sensing time corresponding to the resource selection time at least partially overlaps the active time and the resource selection time satisfies the PDB limitation.

In a case that the first object includes the selectable range of resource selection time, the value of the first parameter may be configured such that a sensing time corresponding to a selectable range of resource selection time related to the first parameter at least partially overlaps the active time and the selectable range of resource selection time satisfies the PDB limitation.

Optionally, the first object includes the resource selection time, and the resource selection time satisfying the PDB limitation includes an end point of the resource selection time being no later than an end point of the PDB.

For example, the end point of the resource selection time is no later than an end point of remaining (Remaining) PDB.

Optionally, the first object includes the selectable range of resource selection time, and the selectable range of resource selection time satisfying the PDB limitation includes the end point of the selectable range of resource selection time being no later than an end point of the PDB.

For example, the end point of the selectable range of resource selection time is no later than an end point of remaining PDB.

Optionally, in a case that it is impossible to satisfy both a first constraint and a second constraint, the first constraint is performed or the second constraint is performed; where
the first constraint is that the first object satisfies the PDB limitation, and the second constraint is that a sensing time corresponding to the first object at least partially overlaps the active time.

In this embodiment, in a case that the resource selection time configured cannot satisfy both the sensing time corresponding to the resource selection time at least partially overlapping the active time and the resource selection time satisfying the PDB limitation, the sensing time corresponding to the resource selection time at least partially overlapping the active time may be preferably satisfied. For example, it is preferably ensured that during configuration of the resource selection time, the sensing time corresponding to the resource selection time at least partially overlaps the active time, and that at least a part of the resource selection time is allowed to be not covered by the remaining PDB. Alternatively, it is preferably ensured that the resource selection time satisfies the PDB limitation. For example, it is preferably ensured that during configuration of the resource selection time, the resource selection time satisfies the PDB limitation, and that overlapping duration or overlapping percentage of the sensing time and the active time is allowed to be reduced.

In a case that the first parameter is configured in a way that it cannot satisfy both the sensing time corresponding to the selectable range of resource selection time related to the first parameter at least partially overlapping the active time and the selectable range of resource selection time satisfying the PDB limitation, the sensing time corresponding to the selectable range of resource selection time related to the first parameter at least partially overlapping the active time may be preferably satisfied. For example, it is preferably ensured that during configuration of the first parameter, the sensing time corresponding to the selectable range of resource selection time related to the first parameter at least partially overlaps the active time, and that at least a part of the selectable range of resource selection time is allowed to be not covered by the remaining PDB. Alternatively, it is preferably ensured that the selectable range of resource selection time satisfies the PDB limitation. For example, it is preferably ensured that during configuration of the first parameter, the selectable range of resource selection time satisfies the PDB limitation, and that overlapping duration or overlapping percentage of the sensing time and the active time is allowed to be reduced.

Optionally, the configuring a configuration parameter for the second mechanism includes one of the following:
extending the active time of the second mechanism; and
configuring a second parameter for the second mechanism; where
the second parameter for the second mechanism includes at least one of the following:
   a period of the second mechanism;
   duration of the active time of the second mechanism;
   duration of an inactive time of the second mechanism;
   a location of the second mechanism;
   a location of the active time of the second mechanism;
   a location of an inactive time of the second mechanism;
   a start point or end point of the second mechanism;
   a start point or end point of the active time of the second mechanism; and
   a start point or end point of an inactive time of the second mechanism.

For example, a DRX active time may be extended or at least one of a DRX cycle, DRX active time duration, DRX inactive time duration, DRX location, DRX active time location, DRX inactive time location, DRX start point, DRX end point, DRX active time start point, DRX active time end point, DRX inactive time start point, and DRX inactive time end point may be configured.

For example, the extending the active time may be extending an active time that is before or after the sensing time and that is closest to the sensing time, that is, a start moment of the active time is before or after an end moment of the sensing time such that the active time includes at least a part of the sensing time. The sensing time may be a partial sensing time, full sensing time, sensing time for aperiodic service sensing, sensing time for aperiodic service re-evaluation, sensing time for aperiodic service pre-emption, sensing time indicated by SCI, or the like.

It should be noted that the extending the active time may be understood as adjusting a location (for example, start point or end point) of the active time or may be understood as triggering a DRX timer (DRX timer).

Optionally, the extending the active time of the second mechanism includes one of the following:
starting extending the active time from an indication information reception time;
starting extending the active time from a packet reception time;
starting extending the active time from a reception failure time;
starting extending the active time from a transmission/reception failure time;
starting extending the active time from a demodulation failure time;
starting extending the active time from the start point of the active time; and
starting extending the active time from the end point of the active time.

In this embodiment, the extending the active time may be understood as triggering a DRX timer (DRX timer). Accordingly, the starting extending the active time from an indication information reception time may be understood as starting triggering a DRX timer from the indication information reception time. The starting extending the active time from a packet reception time may be understood as starting triggering a DRX timer from the packet reception time. The starting extending the active time from a transmission/reception failure time may be understood as starting triggering a DRX timer from a reception failure time. The starting extending the active time from a transmission/reception failure time may be understood as starting triggering a DRX timer from a transmission failure time. The starting extending the active time from a demodulation failure time may be understood as triggering a DRX timer from the demodulation failure time. The starting extending the active time from the start point of the active time may be understood as triggering a DRX timer from the start point of the active time. The starting extending the active time from the end point of the active time may be understood as triggering a DRX timer from the end point of the active time.

Optionally, the extending the active time of the second mechanism includes at least one of the following:
extending the end point of the active time to a first moment; and
extending the start point of the active time to a second moment.

In this embodiment, the extending the end point of the active time to a first moment may be understood as adjusting the end point of the active time to the first moment, where the first moment may be later or earlier than the end point moment of the active time, and optionally, the first moment is later than the end point moment of the active time.

The extending the start point of the active time to a second moment may be understood as adjusting the start point of the active time to the second moment, where the second moment may be later or earlier than the start point moment of the active time, and optionally, the second moment is earlier than the start point moment of the active time.

Optionally, the first moment includes one of the following:
an end point of the sensing time; and
a moment offset by a fifth offset value relative to an end point of the sensing time;
a start point of the sensing time;
a moment offset by a sixth offset value relative to a start point of the sensing time;
the resource selection or reselection triggering moment;
a moment offset by a seventh offset value relative to the resource selection or reselection triggering moment;
a re-evaluation triggering moment;
a moment offset by an eighth offset value relative to a re-evaluation triggering moment;
a pre-emption triggering moment; and
a moment offset by a ninth offset value relative to a pre-emption triggering moment.

The fifth offset value, the sixth offset value, the seventh offset value, the eighth offset value, and the ninth offset value may all be set properly depending on an actual situation. This is not limited in this embodiment.

It should be noted that the sensing time may be a partial sensing time, full sensing time, sensing time for aperiodic service sensing, sensing time for aperiodic service re-evaluation, sensing time for aperiodic service pre-emption, or the like.

Optionally, the second moment includes one of the following:
a start point of the sensing time;
a moment offset by a tenth offset value relative to a start point of the sensing time;
an end point of the sensing time; and
a moment offset by an eleventh offset value relative to an end point of the sensing time.

The tenth offset value and the eleventh offset value may be set properly depending on an actual situation. This is not limited in this embodiment.

The sensing time may be a partial sensing time, full sensing time, sensing time for aperiodic service sensing, sensing time for aperiodic service re-evaluation, sensing time for aperiodic service pre-emption, or the like.

Optionally, the extending the active time of the second mechanism includes:
extending the active time in a case that a first condition is met; where
the first condition includes at least one of the following:
   an overlapping part of the sensing time and the active time being less than a third threshold;
   a ratio of an overlapping part of the sensing time and the active time to a first time being less than or equal to a fourth threshold, where the first time includes one of the following: the sensing time, the active time, the inactive time of the second mechanism, and the period of the second mechanism; and
   a gap between a second time and the start point or end point of the active time being less than or equal to a fifth threshold, where the second time includes one of the following: the sensing time, a start point of the sensing time, an end point of the sensing time, the resource selection or reselection triggering moment, a re-evaluation triggering moment, and a pre-emption triggering moment.

The third threshold, the fourth threshold, and the fifth threshold may be set properly depending on an actual situation. This is not limited in this embodiment.

In this embodiment, the gap between the second time and the start point or end point of the active time being less than or equal to the fifth threshold is, for example, a gap between the start point of the sensing time and an end point of a first active time being less than or equal to the fifth threshold, or a gap between an end point of the sensing time and a start point of a first active time being less than or equal to the fifth threshold, where the first active time may be an active time that is before or after the sensing time and that is closest to the sensing time.

Optionally, in the case of a gap between the second time and the start point or end point of the active time being greater than a fifth threshold, the sensing at the sensing time of the first mechanism may be unrelated to the second mechanism, that is, the sensing at the sensing time of the first mechanism may not be limited by or influenced by the second mechanism. In this case, the first terminal allows not to configure the sensing time of the first mechanism to at least partially overlap the active time of the second mechanism, and the first terminal can perform sensing within the sensing time regardless of whether the sensing time at least partially overlaps the active time.

Optionally, before the extending the active time of the second mechanism, the method further includes:
in a case that a resource reserved by SCI is not covered by the active time of the second mechanism, determining, based on periodicity of SCI reservation, whether to extend the active time of the second mechanism.

Optionally, the active time of the second mechanism is extended in a case of aperiodic SCI resource reservation; and/or
the active time of the second mechanism is not extended in a case of periodic SCI resource reservation.

Optionally, that the active time of the second mechanism is extended in a case of aperiodic SCI resource reservation includes that the active time of the second mechanism is extended in a case that aperiodic resource reservation is indicated by SCI in SCIs covered by the sensing time of the first mechanism.

In this embodiment, whether the active time of the second mechanism is extended may be determined based on periodicity of SCI reservation of a part of the SCIs covered by the sensing time of the first mechanism. For example, the active time of the second mechanism is extended provided that aperiodic resource reservation is indicated by the SCI in the SCIs covered by the sensing time.

Optionally, the configuring a second parameter for the second mechanism includes at least one of the following:
configuring the start point of the active time of the second mechanism to be a start point of the sensing time or configuring the start point of the active time of the second mechanism to be a time offset by a twelfth offset value relative to a start point of the sensing time;
configuring the end point of the active time of the second mechanism to be an end point of the sensing time or configuring the end point of the active time of the second mechanism to be a time offset by a thirteenth offset value relative to an end point of the sensing time;
configuring the active time of the second mechanism to at least partially overlap at least M of the sensing time, where M is a positive integer;
configuring the duration of the active time of the second mechanism to be greater than or equal to a sixth threshold; and
in a case that the sensing time is a partial sensing time, configuring the period of the second mechanism to be a step of the partial sensing time.

The twelfth offset value and the thirteenth offset value may both be set properly depending on an actual situation. This is not limited in this embodiment. The value of M may be predefined in a protocol, indicated by the second terminal, indicated by the network device, or determined by the first terminal. The sixth threshold may be a value greater than or equal to the duration of the sensing time, and optionally, the sixth threshold is the duration of the sensing time. The sensing time may correspond to, be associated with, or be related to the resource selection or reselection time, the candidate resource set, or the resource reporting time.

The configuring the active time of the second mechanism to at least partially overlap at least M of the sensing time is, for example, in a case that the resource selection time is [n+N1, n+N2] and that the corresponding sensing times are partial sensing times, the DRX active time may be adjusted such that the DRX active time at least partially overlaps at least M of the partial sensing times [n+N1-k×step, n+N2-k×step] (k = 1, 2, 3 ..., step being the step of the partial sensing times).

Optionally, the configuring a second parameter for the second mechanism includes:
configuring the second parameter for the second mechanism based on a property of a service.

Optionally, the configuring the second parameter for the second mechanism based on a property of a service includes:
configuring the period of the second mechanism to be a period of the service in a case of periodic service transmission.

Optionally, the configuring a sensing time of a first mechanism to at least partially overlap an active time of a second mechanism includes at least one of the following:
configuring duration of an overlapping part of the sensing time and the active time to be greater than or equal to a seventh threshold;
configuring a ratio of an overlapping part of the sensing time and the active time to a third time to be greater than or equal to an eighth threshold, where the third time includes one of the following: the sensing time, the active time, an inactive time of the second mechanism, and a period of the second mechanism; and
configuring at least N of the sensing time to at least partially overlap the active time, where N is a positive integer.

The seventh threshold and the eighth threshold may be set properly depending on an actual situation. This is not limited in this embodiment.

Optionally, the sensing time is at least one of the following:
a full sensing time;
a partial sensing time;
sensing times related to aperiodic transmission; and
a sensing time related to signaling.

Optionally, the sensing times related to aperiodic transmission include:
a sensing time for aperiodic service sensing;
a sensing time for aperiodic service re-evaluation; and
a sensing time for aperiodic service pre-emption.

Optionally, the sensing time related to signaling includes:
a sensing time indicated by SCI.

Optionally, the configuring a sensing time of a first mechanism to at least partially overlap an active time of a second mechanism includes:
in a case that a gap between a fourth time and a start point or end point of the active time is less than or equal to a ninth threshold, configuring the sensing time of the first mechanism to at least partially overlap the active time of the second mechanism; where
in a case that the gap between the fourth time and the start point or end point of the active time is greater than the ninth threshold, sensing within the sensing time is unrelated to the second mechanism; where
the fourth time includes one of the following: a start point of the sensing time, an end point of the sensing time, the sensing time, a resource selection or reselection triggering moment, a re-evaluation triggering moment, and a pre-emption triggering moment.

The ninth threshold may be set properly depending on an actual situation. This is not limited in this embodiment.

In this embodiment, in the case that the gap between the fourth time and the start point or end point of the active time is less than or equal to the ninth threshold, the sensing time of the first mechanism may be configured to at least partially overlap the active time of the second mechanism, and in the case that the gap between the fourth time and the start point or end point of the active time is greater than the ninth threshold, sensing within the sensing time may be unrelated to the second mechanism, that is, the sensing at the sensing time of the first mechanism may not be limited by or influenced by the second mechanism. In this case, the first terminal allows not to configure the sensing time of the first mechanism to at least partially overlap the active time of the second mechanism, and the first terminal can perform sensing within the sensing time regardless of whether the sensing time at least partially overlaps the active time.

Optionally, the method further includes at least one of the following:
configuring at least one of the sensing time and the active time to at least partially overlap a second object in a first communication technology or a second communication technology; and
configuring a fifth time for V2X in the first communication technology to at least partially overlap a third object in V2X in the second communication technology, where the fifth time includes at least one of the sensing time and the active time.

In this embodiment, the first communication technology may be NR, and the second communication technology may be LTE.

In an embodiment, at least one of the sensing time and the active time may be configured to at least partially overlap the second object in NR or LTE. For example, at least one of the sensing time and the active time may be configured to be aligned with the second object in NR or LTE. In this embodiment, the sensing time and the active time may be a sensing time and active time in SL, and the second object may include a paging occasion (paging occasion), a DRX related parameter, or the like.

In another embodiment, at least one of the sensing time and active time in NR V2X may be configured to at least partially overlap the third object in LTE V2X. For example, at least one of the sensing time and active time in NR V2X may be configured to be aligned with the third object in LTE V2X.

In another embodiment, at least one of the sensing time and active time in SL may be configured to at least partially overlap the second object in NR or LTE, and at least one of the sensing time and active time in NR V2X may be configured to at least partially overlap the third object in LTE V2X.

Optionally, the second object may include one of the following:
a paging occasion;
idle state (idle) DRX;
an active time of idle state DRX;
an inactive time of idle state DRX;
a downlink synchronization signal block (Synchronous Signal Block, SSB) for a serving cell; and
a downlink SSB for a neighbor cell.

The paging occasion can be understood as a paging resource, a paging time, or the like.

For example, at least one of the sensing time and active time in SL may be configured to be aligned with a paging occasion in NR or LTE; at least one of the sensing time and active time in SL is configured to be aligned with idle-DRX in NR or LTE; at least one of the sensing time and active time in SL is configured to be aligned with an active time of idle-DRX in NR or LTE; at least one of the sensing time and active time in SL is configured to be aligned with an inactive time of idle-DRX in NR or LTE; at least one of the sensing time and active time in SL is configured to be aligned with a downlink synchronization signal block for a serving cell (serving DL-SSB) in NR or LTE; and at least one of the sensing time and active time in SL is configured to be aligned with a downlink SSB for a neighbor cell (neighbor DL-SSB) in NR or LTE.

Optionally, the third object may include:
a periodic service.

For example, at least one of the sensing time and active time in NR V2X may be configured to at least partially overlap a periodic LTE V2X service.

In actual application, in a case that NR V2X and LTE V2X coexist in one device and that no NR V2X service or no periodic NR V2X service is received and/or sent within a period of time, the UE may set the active time and/or sensing time to be aligned with the periodic LTE V2X service.

Optionally, the method may further include:
receiving a fourth object at a sixth time; or
skipping receiving a fourth object at a sixth time; where
the sixth time is a time other than the sensing time of the first mechanism.

In this embodiment, the sixth time may include any time that does not overlap the sensing time. The fourth object may include but is not limited to at least one of a PSCCH, a PSSCH, a physical sidelink broadcast channel (Physical Sidelink Broadcast Channel, PSBCH), a physical sidelink feedback channel (Physical Sidelink Feedback Channel, PSFCH), SCI, an SSB, a reference signal (Reference Signal, RS), and the like.

In an embodiment, the fourth object is received at the sixth time. For example, at least one of the PSCCH, PSSCH, PSBCH, PSFCH, SCI, SSB, and RS is received at a time that does not overlap the sensing time.

In another embodiment, the fourth object is not received at the sixth time. For example, at least one of the PSCCH, PSSCH, PSBCH, PSFCH, SCI, SSB, and RS is not received at a time that does not overlap the sensing time.

Optionally, the fourth object is indicated or reserved by SCI.

Optionally, the sixth time is a time within the active time of the second mechanism but excluding the sensing time of the first mechanism.

In this embodiment, the sixth time is a part of the active time of the second mechanism that does not overlap the sensing time. In other words, the fourth object is received at the part of the active time of the second mechanism that does not overlap the sensing time, or the fourth object is not received at the part of the active time of the second mechanism that does not overlap the sensing time.

It should be noted that various optional embodiments in the embodiments of this application may be implemented in combination with each other under the condition that they do not conflict with each other or may be implemented separately. This is not limited in the embodiments of this application.

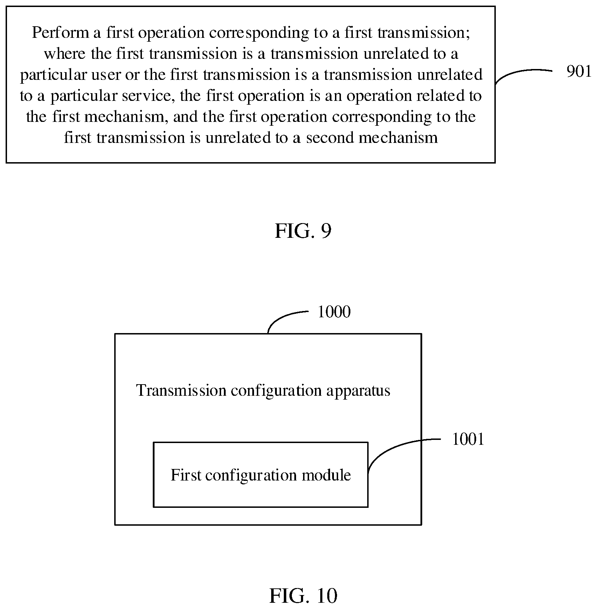

Refer to FIG. 9. FIG. 9 is a flowchart of another transmission configuration method according to an embodiment of this application. The method is executed by a terminal, and the terminal may be a first terminal. As shown in FIG. 9, the method includes the following step.

Step 901. Perform a first operation corresponding to a first transmission; where
the first transmission is a transmission unrelated to a particular user or the first transmission is a transmission unrelated to a particular service, the first operation is an operation related to the first mechanism, and the first operation corresponding to the first transmission is unrelated to a second mechanism.

In this embodiment, that the first operation corresponding to the first transmission is unrelated to a second mechanism may be understood as the first operation corresponding to the first transmission being not limited by the second mechanism or the first operation corresponding to the first transmission being not influenced by the second mechanism. For example, at least one of resource selection, resource reselection, and sensing that are corresponding to the first transmission is unrelated to DRX.

In the transmission configuration method provided in this embodiment of this application, the first operation corresponding to the first transmission is performed, where the first operation corresponding to the first transmission is unrelated to the second mechanism. This can guarantee the performing of the first operation and thus guarantee the reliability of a service corresponding to the first transmission.

Optionally, the operation related to the first mechanism includes at least one of the following: resource selection, resource reselection, resource reservation, resource pre-emption, and sensing.

Optionally, the particular user includes at least one of the following:
a pedestrian user device;
a user device in low power state; and
a user device in power saving mode (power saving UE).

Optionally, the particular service includes at least one of the following:
a commercial service; and
a public safety service.

Optionally, in this embodiment, the sensing time of the first mechanism may be configured to at least partially overlap the active time of the second mechanism only in a case that the sensing time of the first mechanism is not a sensing time corresponding to the first transmission. In the case that the sensing time of the first mechanism is a sensing time corresponding to the first transmission, the first operation corresponding to the first transmission is unrelated to the second mechanism. In this case, the first terminal allows not to configure the sensing time of the first mechanism to at least partially overlap the active time of the second mechanism.

Refer to FIG. 10. FIG. 10 is a structural diagram of a transmission configuration apparatus according to an embodiment of this application. As shown in FIG. 10, the transmission configuration apparatus 1000 includes:
a first configuration module 101 adapted to configure a sensing time of a first mechanism to at least partially overlap an active time of a second mechanism.

Optionally, the first configuration module includes at least one of the following:
a first configuration unit adapted to configure a configuration parameter for the sensing time of the first mechanism such that the sensing time at least partially overlaps the active time of the second mechanism;
a second configuration unit adapted to configure a configuration parameter for a resource selection time of the first mechanism such that a sensing time corresponding to the resource selection time at least partially overlaps the active time of the second mechanism;
a determining unit adapted to determine a candidate resource set of the first mechanism such that a sensing time corresponding to the candidate resource set at least partially overlaps the active time of the second mechanism;
a third configuration unit adapted to configure a value of a first parameter for the first mechanism such that a sensing time corresponding to a selectable range of resource selection time related to the first parameter at least partially overlaps the active time of the second mechanism, the first parameter including at least one of a first sub-parameter and a second sub-parameter, the first sub-parameter being a gap between a resource selection or reselection triggering moment and a start point of the selectable range of resource selection time, and the second sub-parameter being a gap between the resource selection or reselection triggering moment and an end point of the selectable range of resource selection time; and
a fourth configuration unit adapted to configure a configuration parameter for the second mechanism such that the sensing time of the first mechanism at least partially overlaps the active time of the second mechanism.

Optionally, the first configuration unit is specifically adapted to at least one of the following:
configuring a start point of the sensing time to be a start point of the active time or configuring a start point of the sensing time to be offset by a first offset value relative to a start point of the active time;
configuring an end point of the sensing time to be an end point of the active time or configuring an end point of the sensing time to be offset by a second offset value relative to an end point of the active time; and
configuring duration of the sensing time to be shorter than or equal to duration of the active time.

Optionally, the first configuration unit is specifically adapted to:
determine, based on a degree of overlapping of the sensing time with the active time, whether to change the sensing time.

Optionally, in a case of changing the sensing time, the changed-to sensing time includes at least a part of the changed sensing time.

Optionally, the second configuration unit is specifically adapted to at least one of the following:
configuring a start point of the resource selection time to be no earlier than the start point of the selectable range of resource selection time or configuring a start point of the resource selection time to be no earlier than a time offset by a third offset value relative to the start point of the selectable range of resource selection time;
configuring an end point of the resource selection time to be no later than the end point of the selectable range of resource selection time or configuring an end point of the resource selection time to be no later than a time offset by a fourth offset value relative to the end point of the selectable range of resource selection time; and
configuring duration of the resource selection time to be less than a first threshold.

Optionally, the first threshold is duration of the active time of the second mechanism.

Optionally, the third configuration unit is specifically adapted to at least one of the following:
configuring a difference between the first sub-parameter and the second sub-parameter to be less than a second threshold; and
determining a value of the first sub-parameter such that the start point of the selectable range of resource selection time is no later than an end point of the active time.

Optionally, the second threshold is duration of the active time.

Optionally, a first object satisfies a packet delay budget PDB limitation, and the first object includes at least one of the resource selection time and the selectable range of resource selection time.

Optionally, the first object includes the resource selection time, and the resource selection time satisfying the PDB limitation includes an end point of the resource selection time being no later than an end point of the PDB.

Optionally, the first object includes the selectable range of resource selection time, and the selectable range of resource selection time satisfying the PDB limitation includes the end point of the selectable range of resource selection time being no later than an end point of the PDB.

Optionally, in a case that it is impossible to satisfy both a first constraint and a second constraint, the first constraint is performed or the second constraint is performed; where
the first constraint is that the first object satisfies the PDB limitation, and the second constraint is that a sensing time corresponding to the first object at least partially overlaps the active time.

Optionally, the fourth configuration unit is specifically adapted to one of the following:
extending the active time of the second mechanism; and
configuring a second parameter for the second mechanism; where
the second parameter for the second mechanism includes at least one of the following:
   a period of the second mechanism;
   duration of the active time of the second mechanism;
   duration of an inactive time of the second mechanism;
   a location of the second mechanism;
   a location of the active time of the second mechanism;
   a location of an inactive time of the second mechanism;
   a start point or end point of the second mechanism;
   a start point or end point of the active time of the second mechanism; and
   a start point or end point of an inactive time of the second mechanism.

Optionally, the fourth configuration unit is specifically adapted to one of the following:
starting extending the active time from an indication information reception time;
starting extending the active time from a packet reception time;
starting extending the active time from a reception failure time;
starting extending the active time from a transmission/reception failure time;
starting extending the active time from a demodulation failure time;
starting extending the active time from the start point of the active time; and
starting extending the active time from the end point of the active time.

Optionally, the fourth configuration unit is specifically adapted to at least one of the following:
extending the end point of the active time to a first moment; and
extending the start point of the active time to a second moment.

Optionally, the first moment includes one of the following:
an end point of the sensing time; and
a moment offset by a fifth offset value relative to an end point of the sensing time;
a start point of the sensing time;
a moment offset by a sixth offset value relative to a start point of the sensing time;
the resource selection or reselection triggering moment;
a moment offset by a seventh offset value relative to the resource selection or reselection triggering moment;
a re-evaluation triggering moment;
a moment offset by an eighth offset value relative to a re-evaluation triggering moment;
a pre-emption triggering moment; and
a moment offset by a ninth offset value relative to a pre-emption triggering moment.

Optionally, the second moment includes one of the following:
a start point of the sensing time;
a moment offset by a tenth offset value relative to a start point of the sensing time;
an end point of the sensing time; and
a moment offset by an eleventh offset value relative to an end point of the sensing time.

Optionally, the fourth configuration unit is specifically adapted to:
extend the active time in a case that a first condition is met; where
the first condition includes at least one of the following:
   an overlapping part of the sensing time and the active time being less than a third threshold;
   a ratio of an overlapping part of the sensing time and the active time to a first time being less than or equal to a fourth threshold, where the first time includes one of the following: the sensing time, the active time, the inactive time of the second mechanism, and the period of the second mechanism; and
   a gap between a second time and the start point or end point of the active time being less than or equal to a fifth threshold, where the second time includes one of the following: the sensing time, a start point of the sensing time, an end point of the sensing time, the resource selection or reselection triggering moment, a re-evaluation triggering moment, and a pre-emption triggering moment.

Optionally, the apparatus further includes:
a determining module adapted to: before the active time of the second mechanism is extended, in a case that a resource reserved by sidelink control information SCI is not covered by the active time of the second mechanism, determine, based on periodicity of SCI reservation, whether to extend the active time of the second mechanism.

Optionally, the active time of the second mechanism is extended in a case of aperiodic SCI resource reservation; and/or
the active time of the second mechanism is not extended in a case of periodic SCI resource reservation.

Optionally, that the active time of the second mechanism is extended in a case of aperiodic SCI resource reservation includes:
that the active time of the second mechanism is extended in a case that aperiodic resource reservation is indicated by SCI in SCIs covered by the sensing time of the first mechanism.

Optionally, the fourth configuration unit is specifically adapted to at least one of the following:
configuring the start point of the active time of the second mechanism to be a start point of the sensing time or configuring the start point of the active time of the second mechanism to be a time offset by a twelfth offset value relative to a start point of the sensing time;
configuring the end point of the active time of the second mechanism to be an end point of the sensing time or configuring the end point of the active time of the second mechanism to be a time offset by a thirteenth offset value relative to an end point of the sensing time;
configuring the active time of the second mechanism to at least partially overlap at least M of the sensing time, where M is a positive integer;
configuring the duration of the active time of the second mechanism to be greater than or equal to a sixth threshold; and
in a case that the sensing time is a partial sensing time, configuring the period of the second mechanism to be a step of the partial sensing time.

Optionally, the fourth configuration unit is specifically adapted to:
configure the second parameter for the second mechanism based on a property of a service.

Optionally, the fourth configuration unit is specifically adapted to:
configure the period of the second mechanism to be a period of the service in a case of periodic service transmission.

Optionally, the first configuration module is specifically adapted to at least one of the following:
configuring duration of an overlapping part of the sensing time and the active time to be greater than or equal to a seventh threshold;
configuring a ratio of an overlapping part of the sensing time and the active time to a third time to be greater than or equal to an eighth threshold, where the third time includes one of the following: the sensing time, the active time, an inactive time of the second mechanism, and a period of the second mechanism; and
configuring at least N of the sensing time to at least partially overlap the active time, where N is a positive integer.

Optionally, the sensing time is at least one of the following:
a full sensing time;
a partial sensing time;
sensing times related to aperiodic transmission; and a sensing time related to signaling.

Optionally, the sensing times related to aperiodic transmission include:
a sensing time for aperiodic service sensing;
a sensing time for aperiodic service re-evaluation; and
a sensing time for aperiodic service pre-emption.

Optionally, the sensing time related to signaling includes:
a sensing time indicated by sidelink control information SCI.

Optionally, the first configuration module is specifically adapted to:
in a case that a gap between a fourth time and a start point or end point of the active time is less than or equal to a ninth threshold, configure the sensing time of the first mechanism to at least partially overlap the active time of the second mechanism; where
the apparatus further includes:
   a sensing module adapted to: in a case that the gap between the fourth time and the start point or end point of the active time is greater than the ninth threshold, perform sensing at the sensing time; where
   the fourth time includes one of the following: a start point of the sensing time, an end point of the sensing time, the sensing time, a resource selection or reselection triggering moment, a re-evaluation triggering moment, and a pre-emption triggering moment.

Optionally, the apparatus further includes at least one of the following:
a second configuration module adapted to configure at least one of the sensing time and the active time to at least partially overlap a second object in a first communication technology or a second communication technology; and
a third configuration module adapted to configure a fifth time for V2X in the first communication technology to at least partially overlap a third object in V2X in the second communication technology, where the fifth time includes at least one of the sensing time and the active time.

Optionally, the second object includes one of the following:
a paging occasion;
idle state DRX;
an active time of idle state DRX;
an inactive time of idle state DRX;
a downlink synchronization signal block SSB for a serving cell; and
a downlink SSB for a neighbor cell.

Optionally, the third object includes:
a periodic service.

Optionally, the apparatus further includes a receiving module, where the receiving module is specifically adapted to:
receive a fourth object at a sixth time; or
skip receiving a fourth object at a sixth time; where
the sixth time is a time other than the sensing time of the first mechanism.

Optionally, the fourth object includes at least one of the following: a physical sidelink control channel PSCCH, a physical sidelink shared channel PSSCH, a physical sidelink broadcast channel PSBCH, a physical sidelink feedback channel PSFCH, sidelink control information SCI, a synchronization signal block SSB, and a reference signal RS.

Optionally, the fourth object is indicated or reserved by SCI.

Optionally, the sixth time is a time within the active time of the second mechanism but excluding the sensing time of the first mechanism.

The transmission configuration apparatus provided in this embodiment of this application can implement the processes in the method embodiment in FIG. 6. To avoid repetition, details are not described herein again.

It should be noted that the transmission configuration apparatus in this embodiment of this application may be an apparatus or may be a component, an integrated circuit, or a chip in an electronic device.

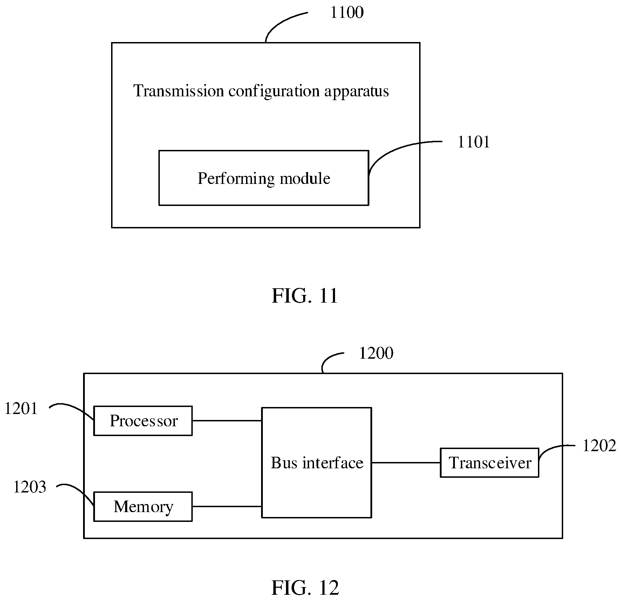

Refer to FIG. 11. FIG. 11 is a structural diagram of another transmission configuration apparatus according to an embodiment of this application. As shown in FIG. 11, the transmission configuration apparatus 1100 includes:
a performing module 1101 adapted to perform a first operation corresponding to a first transmission; where
the first transmission is a transmission unrelated to a particular user or the first transmission is a transmission unrelated to a particular service, the first operation is an operation related to the first mechanism, and the first operation corresponding to the first transmission is unrelated to a second mechanism.

Optionally, the operation related to the first mechanism includes at least one of the following: resource selection, resource reselection, resource reservation, resource pre-emption, and sensing.

Optionally, the particular user includes at least one of the following:
a pedestrian user device;
a user device in low power state; and
a user device in power saving mode.

Optionally, the particular service includes at least one of the following:
a commercial service; and
a public safety service.

The transmission configuration apparatus provided in this embodiment of this application can implement the processes in the method embodiment in FIG. 9. To avoid repetition, details are not described herein again.

It should be noted that the transmission configuration apparatus in this embodiment of this application may be an apparatus or may be a component, an integrated circuit, or a chip in a terminal.

Refer to FIG. 12. FIG. 12 is a structural diagram of an electronic device according to an embodiment of this application. The electronic device 1200 includes a processor 1201, a transceiver 1202, a memory 1203, and a bus interface.

The processor 1201 is adapted to configure a sensing time of the first mechanism to at least partially overlap an active time of the second mechanism.

It should be understood that in this embodiment, the processor 1201 and the transceiver 1202 is capable of implementing the processes implemented by the electronic device in the method embodiment in FIG. 6, with the same technical effects achieved. To avoid repetition, details are not described herein again.

It should be noted that the transceiver 1202 is adapted to receive and send data under control of the processor 1201. The transceiver 1202 includes at least two antenna ports.

In FIG. 12, a bus architecture may include any quantity of interconnected buses and bridges, specifically for interconnecting various circuits of one or more processors represented by the processor 1201 and a memory represented by the memory 1203. The bus architecture may further interconnect various other circuits such as a peripheral device, a voltage regulator, and a power management circuit. These are all well-known in the art, and therefore are not further described in this specification. The bus interface provides an interface. The transceiver 1202 may be a plurality of components, that is, the transceiver 1202 includes a transmitter and a receiver, and provides a unit for communicating with various other apparatuses on a transmission medium. For different user equipment, the user interface 1204 may also be an interface for externally or internally connecting a required device, and the connected device includes but is not limited to a mini keyboard, a display, a speaker, a microphone, a joystick, or the like.

The processor 1201 is responsible for management of the bus architecture and general processing, and the memory 1203 is capable of storing data that is used by the processor 1201 during operation.

Optionally, an embodiment of this application further provides an electronic device including a processor 1201, a memory 1203, and a program or instructions stored in the memory 1203 and capable of running on the processor 1201, where when the program or instructions are executed by the processor 1201, the processes of the foregoing transmission configuration method embodiment are implemented, with the same technical effects achieved. To avoid repetition, details are not further described herein.

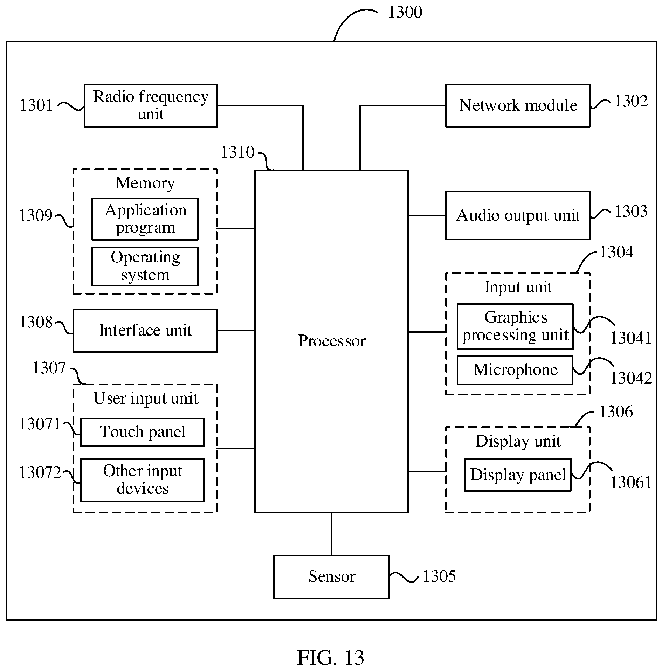

Refer to FIG. 13. FIG. 13 is a structural diagram of a terminal according to an embodiment of this application. As shown in FIG. 13, the terminal 1300 includes but is not limited to components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

It can be understood by those skilled in the art that the terminal 1300 may further include a power supply (for example, a battery) supplying power to the components. The power supply may be logically connected to the processor 1310 via a power management system, such that functions such as charge management, discharge management, and power consumption management are implemented by using the power management system. The structure of the terminal shown in FIG. 13 does not constitute any limitation on the terminal, and the terminal may include more or fewer components than shown in the figure, or combine some of the components, or have different arrangements of the components. Details are not described herein.

It should be understood that in this embodiment of this application, the input unit 1304 may include a graphics processing unit (graphics processing unit, GPU) 13041 and a microphone 13042. The graphics processing unit 13041 processes image data of a static picture or a video that is obtained by an image capture apparatus (for example, a camera) in an image capture mode or a video capture mode. The display unit 1306 may include a display panel 13061. The display panel 13061 may be configured in a form of a liquid crystal display, an organic light-emitting diode display, or the like. The user input unit 1307 includes a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a functional button (such as a volume control button or a power on/off button), a trackball, a mouse, and a joystick. Details are not described herein again.

In this embodiment of this application, the radio frequency unit 1301 transmits downlink data received from a network device to the processor 1310 for processing, and in addition, transmits uplink data to the network device. Generally, the radio frequency unit 1301 includes but is not limited to an antenna, at least one amplifier, a transceiver, a coupler, a low noise amplifier, a duplexer, and the like.

The memory 1309 may be adapted to store software programs or instructions and various data. The memory 109 may include a program or instruction storage area and a data storage area. The program or instruction storage area may store an operating system, an application program or instructions required by at least one function (for example, sound play function or image play function), and the like. In addition, the memory 1309 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 1310 may include one or more processing units. Optionally, the processor 1310 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 1310.

The radio frequency unit 1301 is adapted to perform a first operation corresponding to a first transmission; where
the first transmission is a transmission unrelated to a particular user or the first transmission is a transmission unrelated to a particular service, the first operation is an operation related to the first mechanism, and the first operation corresponding to the first transmission is unrelated to a second mechanism.

It should be understood that in this embodiment, the processor 1310 and the radio frequency unit 1301 is capable of implementing the processes implemented by the terminal in the method embodiment in FIG. 9, with the same technical effects achieved. To avoid repetition, details are not described herein again.

Optionally, an embodiment of this application further provides a terminal including a processor 1310, a memory 1309, and a program or instructions stored in the memory 1309 and capable of running on the processor 1310, where when the program or instructions are executed by the processor 1310, the processes of the foregoing transmission configuration method embodiment are implemented, with the same technical effects achieved. To avoid repetition, details are not further described herein.

An embodiment of this application further provides a readable storage medium, where the readable storage medium may be non-transitory. The readable storage medium stores a program or instructions, and when the program or instructions are executed by a processor, the processes of the foregoing embodiments of the transmission configuration method are implemented, with the same technical effects achieved. To avoid repetition, details are not described herein again.

The processor is the processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is adapted to run a network device program or instructions to implement the processes of the foregoing embodiment of the transmission configuration method, with the same technical effects achieved. To avoid repetition, details are not described herein again.

It should be understood that the chip mentioned in embodiment of this application may also be referred to as a system on a chip or system-on-chip.

An embodiment of this application provides a computer program product. The computer program product is stored in a storage medium, and when being executed by at least one processor, the computer program product is adapted to implement the processes of the foregoing embodiment of the transmission configuration method, with the same technical effects achieved. To avoid repetition, details are not described herein again.

It should be noted that in this specification, the terms "include" and "include", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a base station, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A transmission configuration method performed by an electronic device, wherein the method comprises:
configuring a sensing time of a first mechanism to at least partially overlap an active time of a second mechanism.

2. The method according to claim 1, wherein the configuring a sensing time of a first mechanism to at least partially overlap an active time of a second mechanism comprises at least one of the following:
configuring a configuration parameter for the sensing time of the first mechanism such that the sensing time at least partially overlaps the active time of the second mechanism;
configuring a configuration parameter for a resource selection time of the first mechanism such that a sensing time corresponding to the resource selection time at least partially overlaps the active time of the second mechanism;
determining a candidate resource set of the first mechanism such that a sensing time corresponding to the candidate resource set at least partially overlaps the active time of the second mechanism;
configuring a value of a first parameter for the first mechanism such that a sensing time corresponding to a selectable range of resource selection time related to the first parameter at least partially overlaps the active time of the second mechanism, the first parameter comprising at least one of a first sub-parameter and a second sub-parameter, the first sub-parameter being a gap between a resource selection or reselection triggering moment and a start point of the selectable range of resource selection time, and the second sub-parameter being a gap between the resource selection or reselection triggering moment and an end point of the selectable range of resource selection time; and
configuring a configuration parameter for the second mechanism such that the sensing time of the first mechanism at least partially overlaps the active time of the second mechanism.

3. The method according to claim 2, wherein the configuring a configuration parameter for the sensing time of the first mechanism comprises at least one of the following:
configuring a start point of the sensing time to be a start point of the active time or configuring a start point of the sensing time to be offset by a first offset value relative to a start point of the active time;
configuring an end point of the sensing time to be an end point of the active time or configuring an end point of the sensing time to be offset by a second offset value relative to an end point of the active time; and
configuring duration of the sensing time to be shorter than or equal to duration of the active time.

4. The method according to claim 2, wherein the configuring a configuration parameter for the sensing time of the first mechanism comprises:
determining, based on a degree of overlapping of the sensing time with the active time, whether to change the sensing time.

5. The method according to claim 4, wherein in a case of changing the sensing time, a changed-to sensing time comprises at least a part of the changed sensing time.

6. The method according to claim 2, wherein the configuring a configuration parameter for a resource selection time of the first mechanism comprises at least one of the following:
configuring a start point of the resource selection time to be no earlier than the start point of the selectable range of resource selection time or configuring a start point of the resource selection time to be no earlier than a time offset by a third offset value relative to the start point of the selectable range of resource selection time;
configuring an end point of the resource selection time to be no later than the end point of the selectable range of resource selection time or configuring an end point of the resource selection time to be no later than a time offset by a fourth offset value relative to the end point of the selectable range of resource selection time; and
configuring duration of the resource selection time to be less than a first threshold.

7. The method according to claim 6, wherein the first threshold is duration of the active time of the second mechanism.

8. The method according to claim 2, wherein the configuring a value of a first parameter for the first mechanism comprises at least one of the following:
configuring a difference between the first sub-parameter and the second sub-parameter to be less than a second threshold; and
determining a value of the first sub-parameter such that the start point of the selectable range of resource selection time is no later than an end point of the active time.

9. The method according to claim 8, wherein the second threshold is duration of the active time.

10. The method according to claim 2, wherein a first object satisfies a packet delay budget PDB limitation, and the first object comprises at least one of the resource selection time and the selectable range of resource selection time.

11. The method according to claim 10, wherein the first object comprises the resource selection time, and the resource selection time satisfying the PDB limitation comprises an end point of the resource selection time being no later than an end point of the PDB.

12. The method according to claim 10, wherein the first object comprises the selectable range of resource selection time, and the selectable range of resource selection time satisfying the PDB limitation comprises the end point of the selectable range of resource selection time being no later than an end point of the PDB.

13. The method according to claim 10, wherein in a case that it is impossible to satisfy both a first constraint and a second constraint, the first constraint is performed or the second constraint is performed; wherein
the first constraint is that the first object satisfies the PDB limitation, and the second constraint is that a sensing time corresponding to the first object at least partially overlaps the active time.

14. The method according to claim 2, wherein the configuring a configuration parameter for the second mechanism comprises one of the following:
extending the active time of the second mechanism; and
configuring a second parameter for the second mechanism; wherein
the second parameter for the second mechanism comprises at least one of the following:
a period of the second mechanism;
duration of the active time of the second mechanism;
duration of an inactive time of the second mechanism;
a location of the second mechanism;
a location of the active time of the second mechanism;
a location of an inactive time of the second mechanism;
a start point or end point of the second mechanism;
a start point or end point of the active time of the second mechanism; and
a start point or end point of an inactive time of the second mechanism.

15. The method according to claim 14, wherein the extending the active time of the second mechanism comprises one of the following:
starting extending the active time from an indication information reception time;
starting extending the active time from a packet reception time;
starting extending the active time from a reception failure time;
starting extending the active time from a transmission/reception failure time;
starting extending the active time from a demodulation failure time;
starting extending the active time from the start point of the active time; and
starting extending the active time from the end point of the active time.

16. The method according to claim 14, wherein the extending the active time of the second mechanism comprises at least one of the following:
extending the end point of the active time to a first moment; and
extending the start point of the active time to a second moment.

17. The method according to claim 16, wherein the first moment comprises one of the following:
an end point of the sensing time;
a moment offset by a fifth offset value relative to an end point of the sensing time;
a start point of the sensing time;
a moment offset by a sixth offset value relative to a start point of the sensing time;
the resource selection or reselection triggering moment;
a moment offset by a seventh offset value relative to the resource selection or reselection triggering moment;
a re-evaluation triggering moment;
a moment offset by an eighth offset value relative to a re-evaluation triggering moment;
a pre-emption triggering moment; and
a moment offset by a ninth offset value relative to a pre-emption triggering moment.

18. The method according to claim 16, wherein the second moment comprises one of the following:
a start point of the sensing time;
a moment offset by a tenth offset value relative to a start point of the sensing time;
an end point of the sensing time; and
a moment offset by an eleventh offset value relative to an end point of the sensing time.

19. The method according to claim 14, wherein the extending the active time of the second mechanism comprises:
extending the active time in a case that a first condition is met; wherein
the first condition comprises at least one of the following:
an overlapping part of the sensing time and the active time being less than a third threshold;
a ratio of an overlapping part of the sensing time and the active time to a first time being less than or equal to a fourth threshold, wherein the first time comprises one of the following: the sensing time, the active time, the inactive time of the second mechanism, and the period of the second mechanism; and
a gap between a second time and the start point or end point of the active time being less than or equal to a fifth threshold, wherein the second time comprises one of the following: the sensing time, a start point of the sensing time, an end point of the sensing time, the resource selection or reselection triggering moment, a re-evaluation triggering moment, and a pre-emption triggering moment.

20. The method according to claim 14, wherein before the extending the active time of the second mechanism, the method further comprises:
in a case that a resource reserved by sidelink control information SCI is not covered by the active time of the second mechanism, determining, based on periodicity of SCI reservation, whether to extend the active time of the second mechanism.

21. The method according to claim 20, wherein the active time of the second mechanism is extended in a case of aperiodic SCI resource reservation; and/or
the active time of the second mechanism is not extended in a case of periodic SCI resource reservation.

22. The method according to claim 21, wherein that the active time of the second mechanism is extended in a case of aperiodic SCI resource reservation comprises:
that the active time of the second mechanism is extended in a case that aperiodic resource reservation is indicated by SCI in SCIs covered by the sensing time of the first mechanism.

23. The method according to claim 14, wherein the configuring a second parameter for the second mechanism comprises at least one of the following:
configuring the start point of the active time of the second mechanism to be a start point of the sensing time or configuring the start point of the active time of the second mechanism to be a time offset by a twelfth offset value relative to a start point of the sensing time;
configuring the end point of the active time of the second mechanism to be an end point of the sensing time or configuring the end point of the active time of the second mechanism to be a time offset by a thirteenth offset value relative to an end point of the sensing time;
configuring the active time of the second mechanism to at least partially overlap at least M of the sensing time, wherein M is a positive integer;
configuring the duration of the active time of the second mechanism to be greater than or equal to a sixth threshold; and
in a case that the sensing time is a partial sensing time, configuring the period of the second mechanism to be a step of the partial sensing time.

24. The method according to claim 15, wherein the configuring a second parameter for the second mechanism comprises:
configuring the second parameter for the second mechanism based on a property of a service.

25. The method according to claim 24, wherein the configuring the second parameter for the second mechanism based on a property of a service comprises:
configuring the period of the second mechanism to be a period of the service in a case of periodic service transmission.

26. The method according to claim 1, wherein the configuring a sensing time of a first mechanism to at least partially overlap an active time of a second mechanism comprises at least one of the following:
configuring duration of an overlapping part of the sensing time and the active time to be greater than or equal to a seventh threshold;
configuring a ratio of an overlapping part of the sensing time and the active time to a third time to be greater than or equal to an eighth threshold, wherein the third time comprises one of the following: the sensing time, the active time, an inactive time of the second mechanism, and a period of the second mechanism; and
configuring at least N of the sensing time to at least partially overlap the active time, wherein N is a positive integer.

27. The method according to claim 1, wherein the sensing time is at least one of the following:
a full sensing time;
a partial sensing time;
sensing times related to aperiodic transmission; and
a sensing time related to signaling.

28. The method according to claim 27, wherein the sensing times related to aperiodic transmission comprise:
a sensing time for aperiodic service sensing;
a sensing time for aperiodic service re-evaluation; and
a sensing time for aperiodic service pre-emption.

29. The method according to claim 26, wherein the sensing time related to signaling comprises:
a sensing time indicated by sidelink control information SCI.

30. The method according to claim 1, wherein the configuring a sensing time of a first mechanism to at least partially overlap an active time of a second mechanism comprises:
in a case that a gap between a fourth time and a start point or end point of the active time is less than or equal to a ninth threshold, configuring the sensing time of the first mechanism to at least partially overlap the active time of the second mechanism; wherein
in a case that the gap between the fourth time and the start point or end point of the active time is greater than the ninth threshold, sensing within the sensing time is unrelated to the second mechanism; wherein
the fourth time comprises one of the following: a start point of the sensing time, an end point of the sensing time, the sensing time, a resource selection or reselection triggering moment, a re-evaluation triggering moment, and a pre-emption triggering moment.

31. The method according to claim 1, wherein the method further comprises at least one of the following:
configuring at least one of the sensing time and the active time to at least partially overlap a second object in a first communication technology or a second communication technology; and
configuring a fifth time for V2X in the first communication technology to at least partially overlap a third object in V2X in the second communication technology, wherein the fifth time comprises at least one of the sensing time and the active time.

32. The method according to claim 31, wherein the second object comprises one of the following:
a paging occasion;
idle state DRX;
an active time of idle state DRX;
an inactive time of idle state DRX;
a downlink synchronization signal block SSB for a serving cell; and
a downlink SSB for a neighbor cell.

33. The method according to claim 31, wherein the third object comprises:
a periodic service.

34. The method according to claim 1, wherein the method further comprises:
receiving a fourth object at a sixth time; or
skipping receiving a fourth object at a sixth time; wherein
the sixth time is a time other than the sensing time of the first mechanism.

35. The method according to claim 34, wherein the fourth object comprises at least one of the following: a physical sidelink control channel PSCCH, a physical sidelink shared channel PSSCH, a physical sidelink broadcast channel PSBCH, a physical sidelink feedback channel PSFCH, sidelink control information SCI, a synchronization signal block SSB, and a reference signal RS.

36. The method according to claim 34, wherein the fourth object is indicated or reserved by SCI.

37. The method according to claim 34, wherein the sixth time is a time within the active time of the second mechanism but excluding the sensing time of the first mechanism.

38. A transmission configuration method performed by a terminal, wherein the method comprises:
performing a first operation corresponding to a first transmission; wherein
the first transmission is a transmission unrelated to a particular user or the first transmission is a transmission unrelated to a particular service, the first operation is an operation related to a first mechanism, and the first operation corresponding to the first transmission is unrelated to a second mechanism.

39. The method according to claim 38, wherein the operation related to the first mechanism comprises at least one of the following: resource selection, resource reselection, resource reservation, resource pre-emption, and sensing.

40. The method according to claim 38, wherein the particular user comprises at least one of the following:
a pedestrian user device;
a user device in low power state; and
a user device in power saving mode.

41. The method according to claim 38, wherein the particular service comprises at least one of the following:
a commercial service; and
a public safety service.

42. A transmission configuration apparatus, wherein the apparatus comprises:
a first configuration module adapted to configure a sensing time of a first mechanism to at least partially overlap an active time of a second mechanism.

43. The apparatus according to claim 42, wherein the first configuration module comprises at least one of the following:
a first configuration unit adapted to configure a configuration parameter for the sensing time of the first mechanism such that the sensing time at least partially overlaps the active time of the second mechanism;
a second configuration unit adapted to configure a configuration parameter for a resource selection time of the first mechanism such that a sensing time corresponding to the resource selection time at least partially overlaps the active time of the second mechanism;
a determining unit adapted to determine a candidate resource set of the first mechanism such that a sensing time corresponding to the candidate resource set at least partially overlaps the active time of the second mechanism;
a third configuration unit adapted to configure a value of a first parameter for the first mechanism such that a sensing time corresponding to a selectable range of resource selection time related to the first parameter at least partially overlaps the active time of the second mechanism, the first parameter comprising at least one of a first sub-parameter and a second sub-parameter, the first sub-parameter being a gap between a resource selection or reselection triggering moment and a start point of the selectable range of resource selection time, and the second sub-parameter being a gap between the resource selection or reselection triggering moment and an end point of the selectable range of resource selection time; and
a fourth configuration unit adapted to configure a configuration parameter for the second mechanism such that the sensing time of the first mechanism at least partially overlaps the active time of the second mechanism.

44. A transmission configuration apparatus, wherein the apparatus comprises:
a performing module adapted to perform a first operation corresponding to a first transmission; wherein
the first transmission is a transmission unrelated to a particular user or the first transmission is a transmission unrelated to a particular service, the first operation is an operation related to a first mechanism, and the first operation corresponding to the first transmission is unrelated to a second mechanism.

45. An electronic device comprising a memory, a processor, and a program or instructions stored in the memory and capable of running on the processor, wherein when the program or instructions are executed by the processor, the steps of the transmission configuration method according to any one of claims 1 to 37 are implemented.

46. A terminal comprising a memory, a processor, and a program or instructions stored in the memory and capable of running on the processor, wherein when the program or instructions are executed by the processor, the steps of the transmission configuration method according to any one of claims 38 to 41 are implemented.

47. A readable storage medium, wherein the readable storage medium stores a program or instructions, and when the program or instructions are executed by a processor, the steps of the transmission configuration method according to any one of claims 1 to 37 are implemented or the steps of the transmission configuration method according to any one of claims 38 to 41 are implemented.
